# EUROPÄISCHE PATENTSCHRIFT

(11) **EP 1 019 281 B1**
(45) Veröffentlichungstag und Bekanntmachung des Hinweises auf die Patenterteilung: **14.02.2007**
(21) Anmeldenummer: 99929124.8
(22) Anmeldetag: 01.06.1999
(51) Int. Cl.: B62M 25/04

(54) **SCHALTER FÜR FAHRRADGETRIEBE**
SWITCH FOR BICYCLE SPEED-CHANGING GEAR
ORGANE DE COMMANDE D'UN MECANISME DE CHANGEMENT DE VITESSES D'UNE BICYCLETTE

(30) Priorität: 04.08.1998 DE 19835118; 23.04.1999 DE 19918520
(43) Veröffentlichungstag der Anmeldung: 19.07.2000
(73) Patentinhaber: SRAM Deutschland GmbH, 97404 Schweinfurt (DE)
(72) Erfinder: BLASCHKE, Georg, D-97421 Schweinfurt (DE); WESSEL, Robert, D-97080 Würzburg (DE)
(74) Vertreter: Prechtel, Jörg
(86) Internationale Anmeldenummer: PCT/EP1999/003794
(87) Internationale Veröffentlichungsnummer: WO 2000/007871

(56) Entgegenhaltungen:
- DE-U- 9 015 515
- US-A- 5 615 580

## Beschreibung

Die Erfindung bezieht sich auf einen Schalter zur Betätigung mindestens eines Getriebes an einem Fahrrad gemäß dem Oberbegriff des Anspruchs 1.

Ein Schalter zur Steuerung von Fahrradgetrieben, wie Kettenschaltungen oder Mehrgangnaben ist aus dem deutschen Gebrauchsmuster DE 90 15 515 U1 bekannt geworden, welcher ein Gehäuse aufweist, das aus einer Gehäuseplatte und einem Gehäusedeckel besteht, welche durch eine zentrale Befestigung zusammengehalten werden, ferner eine Seilscheibe, die auf das zum Fahrradgetriebe führende Bowdenzugseil aufgewickelt wird und schließlich einen Schalthebel, der über eine doppelt wirkende Schenkelfeder in einer Mittellage gehalten wird und bei Betätigung in beide Drehrichtungen jeweils einen Gang weiterschaltet, wobei am Hebel zwei Sperrklinken angeordnet sind, die hinsichtlich der Drehrichtung gegenläufig auf eine Zahnscheibe, die drehfest mit der Seilscheibe verbunden ist, wirken, wobei die eine der beiden Sperrklinken durch ihren Eingriff mit der Zahnscheibe diese verdreht, während die andere Sperrklinke gleichzeitig ausgehoben wird.

Eines solche Anordnung der Sperrklinken, welche gegenläufig nach innen gerichtet auf eine Zahnscheibe wirken, ist eine in Fahrradnaben und Schaltern häufig vorkommende klassische Lösung der Gangumsteuerung, die aber für die Verwendung in einem Schalter zu aufwendig und vor allen Dingen in ihrem Platzbedarf zu ausladend ist. Die gemäß der vorliegenden Erfindung vorgeschlagene Losung beschrankt sich auf eine einzige Sperrklinke, die in Verbindung mit der Zugkraft eines Seiles ein Fahrradgetriebe steuert, wobei die Sperrklinke in eine Rastverzahnung in einem Gehäuse einrasten kann, wenn die Drehbewegung entgegen der Richtung des Seilzuges unterbrochen wird. Die Schaltung in der Gegendrehrichtung, also wenn der Schalter dem Seilzug des Seiles nachgeben soll, wird durch einfaches Ausheben der Sperrklinke erreicht, wobei der Seilzug ein Drehelement mit einer Wickelspule so lange zurückdreht, bis die Sperrklinke in die Rastverzahnung des Gehäuses wieder einrasten kann. Wie man sieht, wird also in der einen Drehrichtung gegen den Seilzug des Seiles geschaltet, indem das Drehelement mit der Wickelspule unter Kraftaufwand verdreht wird, und in der Gegendrehrichtung lediglich gesteuert, wobei mittels eines Freigabeansatzes auf einem Griffelement die Sperrklinke lediglich aus ihrer Rastverzahnung im Gehäuse ausgehoben wird. Der Seilzug des vom Fahrradgetriebe vorgespannten Seiles entspricht einer Vorspannung des Drehelementes in Richtung Seilfreigabe, so dass die Sperrklinke schlagartig von der Aushebeposition in der Rastverzahnung zum nächsten Zahn der Rastverzahnung gezogen wird, was in der Schaltung einer Gangstufe entspricht. Der Gangwechsel kann abgeschlossen sein, bevor der Schaltvorgang durch Drehen des Griffelementes beendet ist. Das Schalten des Fahrradgetriebes in Aufwickelrichtung entspricht somit einer Zwangsverstellung des Fahrradgetriebes, beispielsweise einer Kettenschaltung, die vorzugsweise für das Verschwenken einer Fahrradkette von einem kleineren auf einen größeren Zahnkranz verwendet wird, da das Umwerfen der Kette in dieser Richtung schwieriger ist als in der entgegengesetzten Richtung, nämlich beim Umwerfen der Kette von einem größeren auf einen kleineren Zahnkranz.

Das Griffelement wird erfindungsgemäß auch zur Vorspannung des Drehelementes in Richtung Seilfreigabe herangezogen, was dadurch geschieht, dass bei der Bewegung des Freigabeansatzes durch Drehen des Griffelementes in Richtung Sperrklinke das Federelement bereits vorgespannt wird, um dann, wenn die Sperrklinke aushebt, diese mit der Summe aus Vorspannkraft des Federelementes und dem Seilzug des Seiles in die nächste Raste der Rastverzahnung zu katapultieren, womit das Drehelement um den Drehwinkel eines Ganges weitergedreht worden ist.

Es ergibt sich somit die Aufgabe der Erfindung, einen Schalter zu schaffen, der aus Kostengründen aus einer minimalen Anzahl von Teilen, insbesondere aus einer einzigen Sperrklinke, besteht und trotzdem allen Anforderungen an einen sperrklinkengesteuerten Drehgrififschalter gewachsen ist.

Die Lösung der Aufgabe ist im Kennzeichen des Hauptanspruches beschrieben. Ausgestaltungen sind den Unteransprüchen zu entnehmen.

Ein Ausführungsbeispiel eines Schalters zur Betätigung eines Fahrradgetriebes wird anhand von vier schematisierten Zeichnungen erläutert. Es zeigen:
- Fig. 1: einen Schalter, umfassend ein Griffteil, ein Drehteil mit einer Wickelspule in einem Gehäuse in explosiver Darstellung;
- Fig. 2: das Drehteil mit einer Sperrklinke, die angefedert ist;
- Fig. 3: das Drehteil mit einer in sich federnden Sperrklinke, die in einer formschlüssigen Aussparung des Drehteils eingefügt ist;
- Fig. 4: das Drehteil mit einer angeformten Sperrklinke;
- Fig. 5: das Drehteil mit einer Sperrklinke, die mit dem Drehteil über einen Totweg verbunden ist.

Wird mit 1 ein Gehäuse eines Schalters zur Betätigung eines Fahrradgetriebes bezeichnet, so läßt sich dieses am Fahrrad, insbesondere am Lenker des Fahrrades, befestigen und ist derart ausgebildet, daß in diesem ein Drehteil 3 aufgenommen wird, welches eine Wickelspule 4 aufweist, die ein Seil 5 umschlingt, wobei das Seil 5 mit einem Ende auf der Wickelspule 4 befestigt ist. Das Gehäuse 1 weist ferner an einem inneren Umfang eine Rastverzahnung 7 auf, die mit einer Sperrklinke 6 zusammenwirken kann, welche auf dem Drehelement 3 schwenkbar gelagert ist und gegen diese Rastverzahnung 7 angefedert wird. Die Rastverzahnung 7 weist Zähne auf, deren Abstand voneinander vorzugsweise jeweils eine Gangstufe des Fahrradgetriebes ausmachen. Wird also das Drehteil 3 im Gehäuse 1 befestigt, so wird das Seil 5 aus diesem Gehäuse 1 aus einer Seilaustrittsöffnung 13 austreten, wobei die Sperrklinke 6 mit der Rastverzahnung 7 zusammenführbar ist. In diesem Einbauzustand läßt sich das Drehelement 3 lediglich in der Drehrichtung zum Seilaufwickeln verdrehen, wobei die Sperrklinke 6 über die Rastverzahnung 7 hinwegläuft. Soll die Drehrichtung in Richtung Freigabe des Seiles 5 erfolgen, so muß die Sperrklinke 6 aus der Rastverzahnung 7 ausgehoben werden. Auf der Wickelspule 4 lastet ein Drehmoment, welches durch den Seilzug hervorgerufen wird, den das Seil 5 durch eine Federvorspannung im Fahrradgetriebe erzeugt. Wird also die Sperrklinke 6 ausgehoben, so dreht sich das Drehelement 3 mit der Wickelspule 4 in Richtung Seilfreigabe weiter.

Dem Drehelement 3 wird ein Griffelement 2 zugeordnet, welches einen Mitnehmer 8 und einen Freigabeansatz 9 aufweist. Ein Federelement 10 ist in einer Führungsnut 11 im Drehelement 3 in der Weise eingelegt, daß der Mitnehmer 8 in der Richtung Seilaufwickeln gegen einen Anschlag 12 gepreßt wird, wenn das Drehelement 3 in Richtung Seilaufwickeln bewegt wird. Wird das Drehelement in Richtung Seilfreigabe bewegt, so kommt der Mitnehmer 8 mit dem Federelement 10 in Berührung, welches er zusammenpressen kann, wenn das Griffelement 2 in Richtung Seilfreigabe verdreht wird. Der Freigabeansatz 9 hat eine Position 9' im Einbauzustand, welche zur Position des Mitnehmers 8 im Bezug auf den Anschlag 12 und das Federelement 10 in einem bestimmten Winkelverhältnis steht. Dieses Winkelverhältnis ist so ausgeführt, daß zum Zeitpunkt des Schaltens am Griffelement 2 in Richtung Seilfreigabe das Federelement 10 verdichtet wird, wobei sich der Mitnehmer 8 vom Anschlag 12 wegbewegt. Gleichzeitig wird bei dieser Bewegung der Freigabeansatz 9 in Richtung Sperrklinke 6 wandern, wobei der Abstand zwischen der Position 9' des Freigabeansatzes 9 und der Sperrklinke 6 gegen Null geht. Bei Weiterdrehen wird die Sperrklinke 6 ausgehoben und das Drehelement 3 in Richtung Seilfreigabe durch die Summe der Kräfte, nämlich der Federkraft aus dem inzwischen vorgespannten Federelement 10 und der Zugkraft des Seiles 5 in die nächste Raste der Rastverzahnung 7 katapultiert. Es handelt sich somit um einen Schaltvorgang, der plötzlich und schlagartig erfolgt, was beim Fahrradgetriebe eine prompte Reaktion für den Gangwechsel erzeugt.

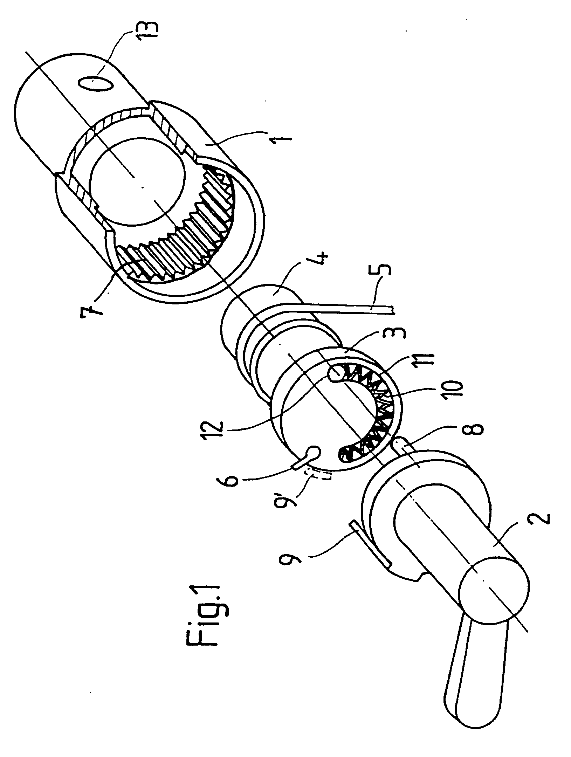

Beim Federelement 10 handelt es sich ganz allgemein um einen Federspeicher in Richtung Freigabe des Seiles hinsichtlich des Zusammenwirkens des Griffelements 2 mit dem Drehelement 3, was besagt, daß das Federelement 10 auch als Spiralfeder um die Drehachse des Drehelementes 3 ausgeführt sein kann. Das Federelement 10 gemäß Fig. 1 soll somit als Element für die Vielzahl möglicher Drehfedern stehen, wobei es hier weniger auf die Federausführung, als vielmehr auf ihre Wirkung in Verbindung mit dem Seilzug des Seiles 5 ankommt.

Beim Schalten des Fahrradgetriebes in Richtung Seilaufwickeln kann die Sperrklinke 6 und die Zahnform der Rastverzahnung im Gehäuse 1 so ausgeführt sein, daß das Einrasten der Sperrklinke 6 in die Rastverzahnung 7 des nächsten Ganges erst dann erfolgt, wenn ein gewisses Maß eines Überschaltweges erzielt ist. Überschaltwege sind bekannt und vielfach erforderlich bei Kettenschaltungen, die meistens eine mangelnde Steigwilligkeit der Fahrradkette beim Schalten von einem kleineren auf einen größeren Zahnkranz aufweisen.

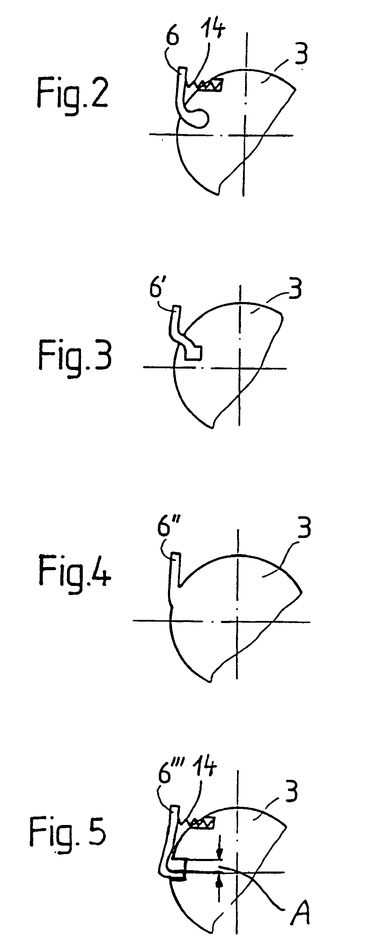

Gemäß den Fig. 2,3 und 4 werden verschiedene Lösungen der Verbindung einer Sperrklinke 6 mit dem Drehelement 3 vorgeschlagen.

Gemäß Fig. 2 ist die Sperrklinke 6 drehbar in dem Drehelement 3 gelagert und durch eine Sperrklinkenfeder 14 nach außen in Richtung Zahneingriff mit der hier nicht dargestellten Rastverzahnung angefedert.

Gemäß Fig. 3 wird eine in sich elastische Sperrklinke 6' in eine passende Öffnung des Drehteils 3 eingefügt, wodurch sich eine Lage für die Sperrklinke 6' ergibt, daß sie im Einbauzustand nach innen angebogen wird, wodurch sie ihre Federkraft zum Einschwenken in die Rastverzahnung 7 des Gehäuses 1 erhält.

Gemäß Fig. 4 ist eine Sperrklinke 6" vorgeschlagen, die einteilig mit dem Drehelement 3 verbunden ist und ebenfalls wie die Sperrklinke 6' gemäß Fig. 3 die Vorspannung zur Rastverzahnung 7 hin auf konstruktivem Wege erhält.

Gemäß Fig. 5 wird eine Sperrklinke 6"' vorgeschlagen, die mit dem Drehelement 3 unter Einbeziehung eines Totweges A in Mitnahmeverbindung steht. Der Totweg A wird vom Drehelement in der Drehrichtung zum Seilaufwickeln durchfahren, bevor die Sperrklinke 6'" mitgenommen wird. Rastet die Sperrklinke 6'" in einen der folgenden Zähne der Rastverzahnung 7 ein, so hat sich das Drehelement um den Drehweg der entsprechenden Zahnteilung zuzüglich des Totweges A weitergedreht, wodurch das Getriebe um die entsprechende Anzahl der Gangstufen zuverlässig weitergeschaltet wird. Der durch den Totweg A zusätzlich dem Getriebe vermittelte Schaltweg reicht nicht aus, um die folgende Gangstufe einzuschalten, er bewirkt aber insbesondere bei Kettenschaltungen beim Schalten von kleineren auf größere Kettenräder die zuverlässige Umlegung einer Antriebskette.

## Patentansprüche

1. Schalter zur Betätigung mindestens eines Getriebes an einem Fahrrad, umfassend ein Gehäuse (1) zur Befestigung des Schalters am Fahrrad, ein Griffelement (2) zur Betätigung des Schalters, ein Drehelement (3) und eine Seilspeichervorrichtung, insbesondere eine Wickelspule (4) zum Aufwickeln eines Seiles (5) zur Betätigung des Getriebes, **dadurch gekennzeichnet, dass** das Drehelement (3) mit der Wickelspule (4) verbunden ist und mindestens eine Sperrklinke (6,6',6",6"') aufweist, die in eine Rastverzahnung (7) des Gehäuses (1) eingreift und dass ein Federelement (10) zwischen Griffelement (2) und Drehelement (3) angeordnet ist, welches zum Zeitpunkt der Ansteuerung der Sperrklinke (6,6',6",6"') das Drehelement (3) in Freigabe-Drehrichtung vorspannt.

2. Schalter nach Anspruch 1, **dadurch gekennzeichnet, dass** das Griffelement (2) mit einem Mitnehmer (8) in das Drehelement (3) eingreift.

3. Schalter nach Anspruch 1 oder 2, **dadurch gekennzeichnet, dass** das Griffelement (2) einen Freigabeansatz (9) aufweist, der die Sperrklinke (6) aus ihrem Eingriff in die Rastverzahnung (7) ausheben kann.

4. Schalter nach einem der Ansprüche 1 bis 3, **dadurch gekennzeichnet, dass** der Mitnehmer (8) am Griffelement (2) das Drehelement (3) in einer Drehrichtung direkt mit nimmt, wohingegen die Bewegung des Drehelementes (3) in der entgegengesetzten Drehrichtung durch die Freigabe der Sperrklinke (6,6',6",6"') bewirkt wird.

5. Schalter nach Anspruch 1 oder 3, **dadurch gekennzeichnet, dass** die Sperrklinke (6,6',6",6"') im Drehelement (3) gelagert und gegen die Rastverzahnung (7) im Gehäuse (1) mittels einer Sperrklinkenfeder (14) angefedert ist.

6. Schalter nach Anspruch 1 oder 3, **dadurch gekennzeichnet, dass** die Sperrklinkenfeder (14) als kinematische Umkehr im Gehäuse (1) gelagert ist und eine ebenfalls im Gehäuse (1) angeordnete Klinke gegen eine Rastverzahnung am Umfang des Drehelementes (3) anfedert.

7. Schalter nach Anspruch 1 oder 3, **dadurch gekennzeichnet, dass** die Sperrklinke (6') mit dem Drehelement (3) verbunden ist, wobei die Sperrklinke (6') federnde Eigenschaften zum federnden Eingriff in der Rastverzahnung (7) aufweist.

8. Schalter nach Anspruch 7, **dadurch gekennzeichnet, dass** die mit Federeigenschaften ausgestattete Sperrklinke (6') am Umfang des Drehelementes (3) in der Weise gefügt ist, dass sie in der ihr zugedachten Stellung im komplett montierten Schalter unter Vorspannung mit der Rastverzahnung (7) zusammenwirken kann.

9. Schalter nach einem der Ansprüche 1 bis 8, **dadurch gekennzeichnet, dass** die Sperrklinke (6") einteilig mit dem Drehelement (3) aus Kunststoffmaterial hergestellt ist.

10. Schalter nach einem der Ansprüche 1 bis 9, **dadurch gekennzeichnet, dass** die Sperrklinke (6"') gegen die Rastverzahnung (7) angefedert ist, wobei sie mit dem Drehelement (3) zur Schaffung eines Überschaltweges unter Einbeziehung eines Totweges (A) in Mitnahmeverbindung steht.

11. Schalter nach einem der Ansprüche 1 bis 10, **dadurch gekennzeichnet, dass** die Steuerung der Sperrklinke (6,6',6",6"') in Richtung Freigabe des Seils (5) in der Weise erfolgt, dass das Federelement (10) um einen bestimmten Betrag des Weges eines Schaltschrittes vorgespannt ist, wenn der Freigabeansatz (9) die Sperrklinke (6) aus der Rastverzahnung (7) aushebt.

## Claims

1. A shift device for actuating at least one gear mechanism on a bicycle, comprising a housing (1) for securing the shift device on the bicycle, a grip element (2) for actuating the shift device, a rotary element (3), and a cable storage device, in particular a spool (4) for winding up a cable (5) to actuate the gear mechanism, **characterized in that** the rotary element (3) is connected to the spool (4) and has at least one detent pawl (6, 6', 6",6"') which engages a detent toothing (7) of the housing (1) and that the spring element (10) is disposed between the grip element (2) and the rotary element (3), preloading the rotary element (3) in the direction of rotation for release when the detent pawl (6, 6', 6", 6"') is activated.

2. The shift device according to claim 1, **characterized in that** the grip element (2) engages in the rotary element (3) by means of a drive means (8).

3. The shift device according to claim 1 or 2, **characterized in that** the grip element (2) comprises a release projection (9) able to lift the detent pawl (6) out of engagement with the detent toothing (7).

4. The shift device according to any one of claims 1 to 3, **characterized in that** the drive means (8) on the grip element (2) takes the rotary element (3) directly along in a direction of rotation, whereas the movement of the rotary element (3) in the opposite direction of rotation is effected by release of the detent pawl (6, 6', 6", 6"').

5. The shift device according to claim 1 or 3, **characterized in that** the detent pawl (6, 6', 6", 6"') is supported in the rotary element (3) and is spring-loaded against the detent toothing (7) in the housing (1) by a detent-pawl spring (14).

6. The shift device according to claim 1 or 3, **characterized in that** the detent-pawl spring (14) is supported in the housing (1) as a kinematic reversal and a detent also arranged in the housing (1) is spring-loaded against a detent toothing at the circumference of the rotary element (3).

7. The shift device according to claim 1 or 3, **characterized in that** the detent pawl (6') is connected to the rotary element (3), the detent pawl (6) having resilient properties for resilient engagement in the detent toothing (7).

8. The shift device according to claim 7, **characterized in that** the detent pawl (6') provided with resilient properties is fitted on the circumference of the rotary element (3) such that when the detent pawl is in the position that it is supposed to have in the completely mounted shift device, the detent pawl can cooperate under preloading with the detent toothing (7).

9. The shift device according to any one of claims 1 to 8, **characterized in that** the detent pawl (6") is integrally produced with the rotary element (3) from a plastic material.

10. The shift device according to any one of claims 1 to 9, **characterized in that** the detent pawl (6"') is spring-loaded against the detent toothing (7), being in driving connection with the rotary element (3) to provide a shift overtravel including an idle travel (A).

11. The shift device according to any one of claims 1 to 10, **characterized in that** control of the detent pawl (6, 6', 6", 6"') in the direction of release of the cable (5) is performed such that the spring element (10) is preloaded by a certain amount of the travel of a shift step when the release projection (9) lifts the detent pawl (6) out of the detent toothing (7).

## Revendications

1. Levier pour l'actionnement d'au moins un dérailleur sur une bicyclette, comprenant un carter (1) pour la fixation du levier sur la bicyclette, une manette (2) pour la manoeuvre du levier, un élément rotatif (3) et un dispositif d'enroulement de câble, en particulier une bobine (4) pour l'enroulement d'un câble (5) pour l'actionnement du dérailleur, **caractérisé en ce que** l'élément rotatif (3) est raccordé à la bobine (4) et comporte au moins un cliquet d'arrêt (6, 6', 6", 6"') engagé dans une denture d'enclenchement (7) du carter (1) et **en ce qu'**est disposé entre la manette (2) et l'élément rotatif (3) un élément à ressort (10) qui, au moment de la commande du cliquet d'arrêt (6, 6', 6", 6"'), précontraint l'élément rotatif (3) dans le sens de rotation de dégagement.

2. Levier selon la revendication 1, **caractérisé en ce que** la manette (2) est engagée par un entraîneur (8) dans l'élément rotatif (3).

3. Levier selon la revendication 1 ou 2, **caractérisé en ce que** la manette (2) présente une saillie de déblocage (9), permettant de dégager le cliquet d'arrêt (6) de la denture d'enclenchement (7) en le relevant.

4. Levier selon l'une des revendications 1 à 3, **caractérisé en ce que** l'entraîneur (8) sur la manette (2) entraîne directement l'élément rotatif (3) dans un sens de rotation, le mouvement de l'élément rotatif (3) dans le sens de rotation opposé étant par contre entraîné par dégagement du cliquet d'arrêt (6, 6', 6", 6"').

5. Levier selon la revendication 1 ou 3, **caractérisé en ce que** le cliquet d'arrêt (6, 6', 6", 6"') est monté dans l'élément rotatif (3) et contraint contre la denture d'enclenchement (7) du carter (1) sous l'action d'un ressort de cliquet (14).

6. Levier selon la revendication 1 ou 3, **caractérisé en ce que** le ressort de cliquet (14) est monté comme inversion cinématique dans le carter (1), et **en ce qu'**un cliquet également disposé dans le carter (1) est contraint par ressort contre une denture d'enclenchement à la circonférence de l'élément rotatif (3).

7. Levier selon la revendication 1 ou 3, **caractérisé en ce que** le cliquet d'arrêt (6') est raccordé à l'élément rotatif (3), le cliquet d'arrêt (6') présentant des propriétés de contrainte pour l'engagement dans la denture d'enclenchement (7) sous l'action d'un ressort.

8. Levier selon la revendication 7, **caractérisé en ce que** le cliquet d'arrêt (6') doté de propriétés de contrainte est monté à la circonférence de l'élément rotatif (3) de manière à pouvoir coopérer avec la denture d'enclenchement (7), dans la position qu'il occupe dans le levier intégralement assemblé.

9. Levier selon l'une des revendications 1 à 8, **caractérisé en ce que** le cliquet d'arrêt (6") est fabriqué en matière plastique d'un seul tenant avec l'élément rotatif (3).

10. Levier selon l'une des revendications 1 à 9, **caractérisé en ce que** le cliquet d'arrêt (6"') est contraint contre la denture d'enclenchement (7) sous l'action d'un ressort, étant en relation d'entraînement avec l'élément rotatif (3) pour exécuter une course de dépassement en tenant compte d'une course morte (A).

11. Levier selon l'une des revendications 1 à 10, **caractérisé en ce que** la commande du cliquet d'arrêt (6, 6', 6", 6"') dans la direction de déblocage du câble (5) est exécutée de manière à précontraindre l'élément à ressort (10) avec une valeur de course définie pour une phase de commutation quand la saillie de déblocage (9) dégage le cliquet d'arrêt (6) de la denture d'enclenchement (7) en le relevant.
